# EUROPEAN PATENT SPECIFICATION

(11) **EP 2 440 695 B1**
(45) Date of publication and mention of the grant of the patent: **02.10.2019**
(21) Application number: 10786823.4
(22) Date of filing: 10.06.2010
(51) Int. Cl.: D02G 3/38, D03D 15/00, B60R 16/02, D03D 1/00, D03D 3/02, D03D 3/08, H02G 3/04

(54) **FLEXIBLE, ABRASION RESISTANT TEXTILE SLEEVE AND METHOD OF CONSTRUCTION THEREOF**
FLEXIBLE, ABNUTZUNGSBESTÄNDIGE TEXTILHÜLLE UND VERFAHREN ZU IHRER HERSTELLUNG
TUBE TEXTILE SOUPLE RÉSISTANT À L'ABRASION, ET PROCÉDÉ DE CONSTRUCTION CORRESPONDANT

(30) Priority: 11.06.2009 US 186174 P
(43) Date of publication of application: 18.04.2012
(73) Proprietor: Federal-Mogul Powertrain LLC, Southfield, MI 48034 (US)
(72) Inventor: KASHIHARA, Emi, Sagamihara Kanagawa 229-0003 (JP)
(74) Representative: HGF Limited
(86) International application number: PCT/US2010/038088
(87) International publication number: WO 2010/144653

(56) References cited:
- WO-A2-2008/070819
- US-A1- 2005 124 249
- US-B2- 7 216 678

## Description

### BACKGROUND OF THE INVENTION

### 1. TECHNICAL FIELD

This invention relates generally to textile sleeves for protecting elongate members, and more particularly to woven sleeves.

### 2. RELATED ART

It is known to wrap wires and wire harnesses in protective sleeves, such as in automobiles, aircraft or aerospace craft, to provide protection to the wires against abrasion, fluid and thermal affects. In order to achieve the desired protection, the protective sleeve may have multiple layers, with some of the layers being specifically provided for different types of protection. For example, one layer may be provided for water resistance, e.g. a sheet of plastic material, while another layer may be provided for abrasion resistance, and yet another layer may be provided for protection against thermal conditions, e.g. a non-woven layer. Unfortunately, although the aforementioned multilayer sleeves may provide suitable protection against the various environmental conditions, they are typically bulky, thereby requiring an increased volume of space, being relatively heavy and exhibiting limited flexibility. This can prove detrimental in some applications, particularly applications requiring routing through tight, winding areas, and applications having weight restrictions, such as aircraft and aerospace applications, for example. In order to reduce the bulk and improve the flexibility of the sleeves, it is also known to use tightly woven multifilament and monofilament yarns in both the warp and fill directions. However, having to use a tight weave typically comes at an increased cost. WO2008/070819 discloses a textile sleeve as recited in the preamble of claim 1.

### SUMMARY OF THE INVENTION

In accordance with the present invention there is provided a woven sleeve for routing and protecting elongate members from exposure to abrasion and other environmental conditions, such as contamination, as recited in claim 1. The sleeve has a flexible, abrasion resistant, self- curling elongate wall constructed from woven monofilament and multifilament yarns. The wall has opposite edges extending generally parallel to a central axis of the sleeve, wherein the opposite edges are biased into a self-curled overlapping relation with one another. The wall is woven with warp monofilament yarns and fill monofilament and multifilament yarns. The warp monofilament yarns provide the sleeve with abrasion resistance; the fill monofilament yarns provide the self-curling bias to the wall, while also providing enhanced abrasion resistance, while the fill multifilament yarns provide further protection to the elongate members within the sleeve by inhibiting the ingress of contamination, debris and the like, while also providing the sleeve with enhanced flexibility and imparting friction on the warp monofilaments to maintain the warp monofilaments in their intended, as woven position.

The monofilament and multifilament fill yarns are dual inserted to provide pairs of the monofilament and multifilament yarns spaced axially from one another by interstices.

A method of constructing a textile sleeve is also provided as recited in claim 4. The method includes weaving an elongate wall having opposite edges extending parallel to a central axis of the sleeve with the wall having warp yarns extending parallel to the axis and fill yarns extending transverse to the warp yarns. Further, the method includes providing the warp yarns as monofilament yarns and the fill yarns as monofilament yarns and multifilament yarns.

The method also includes dual inserting the monofilament and multifilament fill yarns with the warp yarns and providing discrete pairs of the monofilament and multifilament fill yarns spaced axially along the central axis from one another.

A sleeve constructed in accordance with the invention not only provides enhanced protection to elongate members contained therein, but is also economical in manufacture.

### BRIEF DESCRIPTION OF THE DRAWINGS

These and other aspects, features and advantages will become readily apparent to those skilled in the art in view of the following detailed description of presently preferred embodiments and best mode, appended claims, and accompanying drawings, in which:
Figure 1 is schematic perspective view of a woven, self-wrapping sleeve constructed in accordance with one aspect of the invention carrying and protecting elongate members therein; and
Figure 2 is an enlarged partial view of a wall of the sleeve of Figure 1.

### DETAILED DESCRIPTION OF PREFERRED EMBODIMENTS

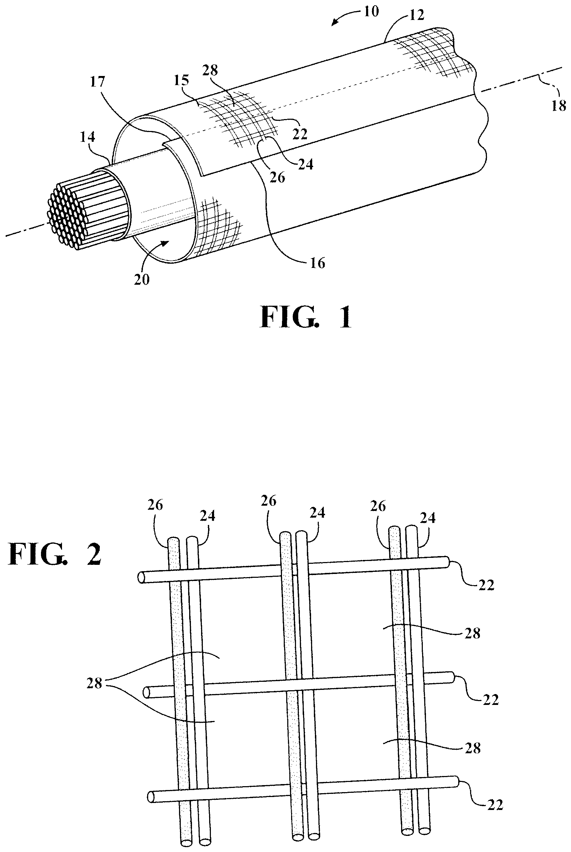

Referring in more detail to the drawings, Figure 1 shows schematic representation of a woven, self-wrapping textile sleeve, referred to hereafter as sleeve 10, constructed in accordance with one aspect of the invention. The sleeve 10 has a self-wrapping elongate wall 12 for routing and protecting elongate members, such as wires or a wire harness 14, for example, from exposure to abrasion and the ingress of contamination, debris and the like. The elongate wall 12 has opposite edges 16, 17 extending generally parallel to a central, longitudinal axis 18, wherein the edges 16, 17 are preferably biased into overlapping relation with one another in "cigarette wrapped" fashion to fully enclose the elongate members 14 within a central cavity 20 of the sleeve. The cavity 20 is readily accessible along the full length of the longitudinal axis 18 so that the elongate members 14 can be readily disposed radially into the cavity 20, and conversely, removed from the cavity 20, such as during service. To provide protection to the elongate members 14 against abrasion, the wall 12 is woven with warp yarns 22 provided as monofilament yarns and fill yarns 24 provided as monofilament yarns, wherein the fill monofilament yarns 24 provide additional, enhanced protection to the elongate members 14 against abrasion, while also providing the bias to self-curl the opposite edges 16, 17 in overlapping relation with one another. The bias is imparted by heat-setting the fill monofilament yarns 24 into their curled configuration about the central axis 18. In addition to the fill monofilament yarns 24, the wall 12 has fill yarns 26 provided as multifilament yarns. The multifilament yarns 26 provide additional surface area coverage of the wall 12 to the elongate members 14 and inhibit ingress of contamination, debris, or the like into the cavity 20, thereby providing enhanced protection to the elongate members 14. In addition, the multifilament yarns 26 maintain the warp monofilaments 22 in place in their intended, as woven position by imparting friction on the warp monofilaments 22, while providing the sleeve 10 with sufficient flexibility for routing around corners, for example.

Depending on the application needs, the wall 12 can be constructed having any suitable size, including length and diameter. When the wall 12 is in its self- wrapped tubular configuration, generally free from any externally applied forces, the edges 16, 17 preferably overlap one another at least slightly to fully enclose the cavity 20, and thus, provide enhanced protection to the wires 14 contained in the cavity 20. The edges 16, 17 are readily extendable away from one another under an externally applied force sufficient to overcome the bias imparted by the fill monofilament yarns 24 to at least partially open and expose the cavity 20. Accordingly, the wires 14 can be readily disposed into the cavity 20 during assembly or removed from the cavity 20 during service. Upon releasing the externally applied force, the edges 16, 17 return automatically to their natural, overlapping self-wrapped position under the bias imparted by the heat-set fill monofilament yarns 24.

The monofilament yarns 22, 24 can be provided as any suitable heat-settable polymeric material, such as polyphenylene sulfide (PPS) or polyethyleneterephthalate (PET), for example. In one exemplary sleeve embodiment, the monofilament yarns 22, 24 were provided as PET having a diameter of about 0.22mm. The wall 12 was formed having a width (dimension extending between the edges 16, 17 with the wall 12 in a flattened state) of about 42mm, and the number of ends of the warp monofilaments 22 was 48. The fill monofilament yarns 24 and the fill multifilament yarns 26 were dual inserted having a pick per inch (PPI) of 10 (∼4 picks per cm), however, a PPI between about 8-12 (-3-5 picks per cm) is considered to be within a workable range. With such a low PPI, interstices 28 are formed within the wall 12. Accordingly, the monofilament and multifilament fill yarns 24, 26 provide discrete pairs of the circumferentially extending monofilament and multifilament fill yarns spaced axially along the central axis 18 from one another by the interstices 28 extending axially therebetween. The multifilament yarns 26 were provided having a denier of about 1250. The yarns 22, 24, 26 were woven using a plain weave which resulted in the sleeve 10 having a wall thickness of about 0.6mm. In yet another exemplary sleeve embodiment, the number of ends of the warp monofilaments 22 was 52, with all other yarn factors remaining the same. It should be recognized that these yarn factors can be modified by one skilled in the art in dimension and number, while maintaining the warp yarns 22 as purely monofilaments and the fill yarns 24, 26 as a combination of monofilaments and multifilaments, while remaining within the scope of the invention.

With the warp yarns 22 being provided as purely monofilaments, the abrasion resistance of the sleeve assembly 10 is enhanced. Further, with some of the fill yarns 24 being provided as monofilaments, additional protection against abrasion is provided. Further yet, with some of the fill yarns 26 being provided as multifilaments, added surface area coverage is provided to the wall 12 to the elongate members 14, thereby further protecting the cavity 20 against ingress of contamination, and further, the multifilaments act to maintain the warp monofilaments 22 in their intended location, even under external abrasion force.

Obviously, many modifications and variations of the present invention are possible within the scope of the appended claims.

## Claims

1. A textile sleeve (10) for routing and protecting elongate members, comprising: an elongate wall (12) having opposite edges (16, 17) extending parallel to a central axis (18) of the sleeve, said wall being woven with warp yarns (22) extending parallel to said axis and fill yarns (24) extending transverse to said warp yarns, said warp yarns being provided as monofilament yarns and said fill yarns being provided as monofilament yarns and multifilament yarns,
wherein said monofilament and multifilament fill yarns are dual inserted with said warp yarns to provide discrete pairs of said monofilament and multifilament fill yarns spaced axially along said central axis from one another by interstices,
**characterised in that** said warp yarns (22) are provided solely as monofilament yarns and said fill yarns (24) are woven having between 8-12 picks per inch (∼3-5 picks per cm).

2. The textile sleeve (10) of claim 1 wherein said monofilament fill yarns (24) are heat set to bias the wall (12) into a curled configuration about said central axis (18).

3. The textile sleeve (10) of claim 1 wherein said opposite edges (16, 17) are biased by said monofilament fill yarns (24) in overlapping relation with one another.

4. A method of constructing a textile sleeve (10), comprising: weaving an elongate wall (12) having opposite edges (16, 17) extending parallel to a central axis (18) of the sleeve with the wall having warp yarns (22) extending parallel to the axis and fill yarns (24) extending transverse to the warp yarns; and providing the warp yarns as monofilament yarns and the fill yarns as monofilament yarns and multifilament yarns,
the method further including dual inserting the monofilament and multifilament fill yarns with the warp yarns to provide discrete pairs of the monofilament and multifilament fill yarns spaced axially along the central axis from one another,
**characterised in that** providing the warp yarns (22) solely as monofilament yarns and weaving the fill yarns (24) to having between 8-12 picks per inch (∼3-5 picks per cm).

5. The method of claim 4 further including heat-setting the monofilament fill yarns (24) to bias the wall (12) into a curled configuration about the central axis (18).

6. The method of claim 5 further including biasing the opposite edges (16, 17) with the monofilament fill yarns (24) in overlapping relation with one another.

## Patentansprüche

1. Textilschutzhülle (10) zum Führen und Schützen von länglichen Elementen, umfassend:
eine längliche Wand (12) mit gegenüberliegenden Kanten (16, 17), die sich parallel zu einer Mittelachse (18) der Schutzhülle erstrecken, wobei die Wand mit Kettgarnen (22) geflochten wird, die sich parallel zu der Achse und Füllgarnen (24) erstrecken, die sich querlaufend zu den Kettgarnen erstrecken, wobei die Kettgarne als einfädige Garne bereitgestellt werden und die Füllgarne als einfädige Garne und mehrfädige Garne bereitgestellt werden,
wobei die einfädigen und mehrfädigen Füllgarne mit den Kettgarnen doppelt eingesetzt werden, um getrennte Paare der entlang der Mittelachse voneinander durch Zwischenräume mit Abstand axial angeordneten einfädigen und mehrfädigen Füllgarne bereitzustellen,
**dadurch gekennzeichnet, dass** die Kettgarne (22) ausschließlich als einfädigen Garne bereitgestellt werden und die Füllgarne (24) mit zwischen 8 bis 12 Schüssen je Inch (∼3 bis 5 Schüssen je cm) geflochten werden.

2. Textilschutzhülle (10) nach Anspruch 1, wobei die einfädigen Füllgarne (24) thermofixiert werden, um die Wand (12) in eine gekräuselte Konfiguration um die Mittelachse (18) herum vorzuspannen.

3. Textilschutzhülle (10) nach Anspruch 1, wobei die gegenüberliegenden Kanten (16, 17) durch die einfädigen Füllgarne (24) in miteinander überlappender Beziehung vorgespannt werden.

4. Verfahren zum Aufbauen einer Textilschutzhülle (10), die umfasst: ein Einflechten einer länglichen Wand (12) mit gegenüberliegenden Kanten (16, 17), die sich parallel zu einer Mittelachse (18) der Schutzhülle mit der Wand erstrecken, die Kettgarne (22) aufweist, die sich parallel zu der Achse und Füllgarnen (24) erstrecken, die sich querlaufend zu den Kettgarnen erstrecken; und ein Bereitstellen der Kettgarne als einfädige Garne und der Füllgarne als einfädige Garne und mehrfädige Garne,
wobei das Verfahren des Weiteren ein doppeltes Einsetzen der einfädigen und mehrfädigen Füllgarne mit den Kettgarnen aufweist, um getrennte Paare der entlang der Mittelachse voneinander mit Abstand axial angeordneten einfädigen und mehrfädigen Füllgarne bereitzustellen,
**dadurch gekennzeichnet, dass** die Kettgarne (22) ausschließlich als einfädige Garne bereitgestellt und die Füllgarne (24) geflochten werden, um zwischen 8 bis 12 Schüsse je Inch (∼ 3 bis 5 Schüsse je cm) aufzuweisen.

5. Verfahren nach Anspruch 4, das des Weiteren ein Thermofixieren der einfädigen Füllgarne (24) aufweist, um die Wand (12) in einer gekräuselten Konfiguration um die Mittelachse (18) herum vorzuspannen.

6. Verfahren nach Anspruch 5, das des Weiteren ein Vorspannen der gegenüberliegenden Kanten (16, 17) mit den einfädigen Füllgarnen (24) in miteinander überlappender Beziehung aufweist.

## Revendications

1. Gaine textile (10) pour l'acheminement et la protection d'éléments allongés, comprenant : une paroi allongée (12) possédant des bords opposés (16, 17) s'étendant parallèlement à un axe central (18) de la gaine, ladite paroi étant tissée avec des fils de chaîne (22), s'étendant parallèlement audit axe, et des fils de trame (24), s'étendant transversalement auxdits fils de chaîne, lesdits fils de chaîne se présentant comme des fils mono-filament, et lesdits fils de trame se présentant comme des fils mono-filament et multi-filaments,
la double insertion desdits fils de trame mono-filament et multi-filaments et desdits fils de chaîne formant des paires discrètes desdits fils de trame mono-filament et multi-filaments espacés axialement les uns des autres, le long dudit axe central, par des interstices,
**caractérisée en ce que** lesdits fils de chaîne (22) se présentent exclusivement comme des fils mini-filament, et lesdits fils de trame (24) sont tissés dans la mesure de 3 à 5 duites au cm (∼8 à 12 duites au pouce).

2. Gaine textile (10) selon la revendication 1, lesdits fils de trame (24) mono-filament étant thermo-fixés pour solliciter la paroi (12) en une configuration bouclée autour dudit axe central (18).

3. Gaine textile (10) selon la revendication 1, lesdits bords opposés (16, 17) étant sollicités par lesdits fils de trame (24) mono-filament afin qu'ils se chevauchent.

4. Méthode de réalisation d'une gaine textile (10), comprenant : le tissage d'une paroi allongée (12) possédant des bords opposés (16, 17) s'étendant parallèlement à un axe central (18) de la gaine, la paroi possédant des fils de chaîne (22) s'étendant parallèlement à l'axe, et des fils de trame (24), s'étendant transversalement auxdits fils de chaîne ; et les fils de chaîne se présentant comme des fils mono-filament, et les fils de trame se présentant comme des fils mono-filament et multi-filaments,
la méthode comprenant en outre la double insertion desdits fils de trame mono-filament et multi-filaments avec les fils de chaîne pour constituer des paires discrètes de fils de trame mono-filament et multi-filaments espacés axialement les uns des autres le long de l'axe central,
**caractérisée en ce que** lesdits fils de chaîne (22) se présentent exclusivement comme des fils mono-filament, et lesdits fils de trame (24) sont tissés dans la mesure de 3 à 5 duites au cm (∼8 à 12 duites au pouce).

5. Méthode selon la revendication 4, comprenant en outre la thermo-fixation des fils de trame (24) mono-filament pour solliciter la paroi (12) en une configuration bouclée autour de l'axe central (18).

6. Méthode selon la revendication 5, comprenant en outre la sollicitation des bords opposés (16, 17) avec les fils de trame (24) mono-filament afin qu'ils se chevauchent.
